# EUROPÄISCHE PATENTSCHRIFT

(11) **EP 3 055 056 B1**
(45) Veröffentlichungstag und Bekanntmachung des Hinweises auf die Patenterteilung: **18.12.2019**
(21) Anmeldenummer: 14780478.5
(22) Anmeldetag: 02.10.2014
(51) Int. Cl.: B01J 12/00, B01J 19/00, B01J 19/24, C01C 3/02, B01J 21/04, B01J 23/42, B01J 35/04

(54) **REAKTIONSROHR UND VERFAHREN ZUR HERSTELLUNG VON CYANWASSERSTOFF**
REACTION TUBE AND METHOD FOR THE PRODUCTION OF HYDROGEN CYANIDE
TUBE DE RÉACTION ET PROCÉDÉ DE FABRICATION DE CYANURE D'HYDROGÈNE

(30) Priorität: 11.10.2013 EP 13188304
(43) Veröffentlichungstag der Anmeldung: 17.08.2016
(73) Patentinhaber: Evonik Operations GmbH, 45128 Essen (DE)
(72) Erfinder: STEFFAN, Martin, Singapore 098652 (SG); STEURENTHALER, Martin, Singapore 098645 (SG); MÜLLER, Thomas, 63674 Altenstadt (DE); KÖRFER, Martin, 63796 Kahl (DE); KRILL, Steffen, 64367 Mühltal (DE)
(74) Vertreter: Evonik Patent Association
(86) Internationale Anmeldenummer: PCT/EP2014/071119
(87) Internationale Veröffentlichungsnummer: WO 2015/052066

(56) Entgegenhaltungen:
- EP-A2- 0 004 079
- WO-A2-2006/050781
- DE-A1- 4 128 201
- US-A- 3 156 544
- US-A- 3 970 435

## Beschreibung

Die Erfindung richtet sich auf ein Reaktionsrohr für die Herstellung von Cyanwasserstoff, sowie auf ein Verfahren zur Herstellung von Cyanwasserstoff unter Verwendung dieses Reaktionsrohrs.

Das BMA-Verfahren zur Herstellung von Cyanwasserstoff aus Ammoniak und einem aliphatischen Kohlenwasserstoff mit 1 bis 4 Kohlenstoffatomen wird bei Temperaturen im Bereich von 1000 °C bis 1400 °C durchgeführt. Da die Reaktion endotherm ist, muss bei dem Verfahren der Reaktionsmischung Wärme zugeführt werden. Im technischen Maßstab wird das BMA-Verfahren in von außen beheizten Reaktionsrohren durchgeführt, die auf der Rohrinnenseite mit einem Platin enthaltenden Katalysator beschichtet sind und von der gasförmigen Reaktionsmischung durchströmt werden. Die Raum-Zeit-Ausbeute in diesen technischen Reaktoren wird durch die geometrische Oberfläche des Reaktionsrohrs und die dadurch begrenzte aktive Oberfläche des platinhaltigen Katalysators bestimmt.

Aus dem Stand der Technik sind für Reaktionsrohre zum Einsatz im BMA-Verfahren Ansätze zur Vergrößerung des Oberflächen/Volumen-Verhältnisses der mit dem Katalysator beschichteten Oberfläche oder zur Erhöhung der Raum-Zeit-Ausbeute durch Änderung der Strömungsverhältnisse im Reaktionsrohr bekannt.

In DE 29 36 844 A1 wird vorgeschlagen, in dem Reaktionsrohr durch Einbauten oder Füllkörper, die ganz oder teilweise mit Katalysator belegt sein können, eine turbulente Strömung zu bewirken, um die Raum-Zeit-Ausbeute und die Ausbeute an Cyanwasserstoff zu verbessern.

Aus WO 90/13405 sind Reaktionsrohre für das BMA-Verfahren bekannt, die periodische Querschnittsänderungen des Reaktionsrohrs von einem kreisförmigen Querschnitt zu einem elliptischen Querschnitt aufweisen.

DE 41 28 201 beschreibt Reaktionsrohre für das BMA-Verfahren, die Einbauten in Form von Wendeln aufweisen, mit denen der turbulente Anteil der Strömung der Reaktionsgase erhöht wird.

Allen diesen Reaktionsrohren ist jedoch gemeinsam, dass während der Herstellung von Cyanwasserstoff in verstärktem Maß eine Verrußung der Innenflächen des Reaktionsrohrs auftritt. Der durch Zersetzung der zur Herstellung von Cyanwasserstoff eingesetzten aliphatischen Kohlenwasserstoffe gebildete Ruß schlägt sich dabei auf dem Platin enthaltenden Katalysator ab und hemmt dadurch die Bildungsreaktion von Cyanwasserstoff. Deshalb müssen häufiger Maßnahmen zur Entfernung von Rußablagerungen getroffen werden, für die die Herstellung von Cyanwasserstoff unterbrochen werden muss. Ein mechanisches Entfernen von Rußablagerungen ist bei den Reaktionsrohren von DE 29 36 844 A1, WO 90/13405 und DE 41 28 201 wegen der Einbauten oder Querschnittsveränderungen praktisch nicht möglich.

Aus DE 1 078 554 und WO 2006/050781 sind Reaktionsrohre mit innerhalb des Reaktionsrohrs in Längsrichtung des Rohrs angeordneten rohrförmigen oder stabförmigen Einbauten bekannt. Mit solchen Einbauten lässt sich zwar die Raum-Zeit-Ausbeute und die Ausbeute an Cyanwasserstoff verbessern, doch weisen diese Einbauten im Dauerbetrieb erhebliche Nachteile auf. Bei dem Aufheizen auf Reaktionstemperatur können sich rohrförmige oder stabförmige Einbauten verbiegen, so dass sie die Rohrinnenwand berühren. Außerdem können rohrförmige oder stabförmige Einbauten durch die Strömung der Reaktionsmischung durch das Rohr in Schwingungen oder kreiselnde Bewegungen versetzt werden. Dies kann dazu führen, dass die Einbauten im Betrieb an der Rohrinnenwand reiben und im Lauf der Zeit Katalysator von der Rohrinnenwand abreiben, was dann ausgehend von den abgeriebenen Stellen zu einer starken Verrußung der Innenflächen des Reaktionsrohrs führt. Eine Verformung der Einbauten führt außerdem zu einer ungleichmäßigen Strömungsverteilung über den Rohrquerschnitt, die eine ungleichmäßige Temperaturverteilung zur Folge hat und zu thermischen Spannungen im Reaktionsrohr führt, die zu einem Bruch des Reaktionsrohrs im Betrieb führen können.

Es besteht deshalb weiterhin ein Bedarf an Reaktionsrohren für die Herstellung von Cyanwasserstoff, mit denen sich im Vergleich zu den im technischen Maßstab eingesetzten zylindrischen Rohren eine bessere Raum-Zeit-Ausbeute und eine höhere Ausbeute an Cyanwasserstoff erzielen lässt und die nicht die Nachteile der aus DE 1 078 554 und WO 2006/050781 bekannten Reaktionsrohre mit rohrförmigen oder stabförmigen Einbauten aufweisen.

Es wurde nun gefunden, dass sich diese Aufgabe durch in das Reaktionsrohr eingeschobene Einbaukörper aus Keramik lösen lässt, die von der Rohrachse zur Rohrinnenwand weisenden Rippen aufweisen.

Gegenstand der Erfindung ist deshalb ein Reaktionsrohr für die Herstellung von Cyanwasserstoff, umfassend ein zylindrisches Rohr aus Keramik und einen auf der Rohrinnenwand aufgebrachten, Platin enthaltenden Katalysator, dass dadurch gekennzeichnet ist, dass es mindestens einen in das zylindrische Rohr eingeschobenen Einbaukörper aus Keramik mit drei oder vier von der Rohrachse zur Rohrinnenwand weisenden Rippen aufweist, wobei die Rippen den Rohrinnenraum in im wesentlichen gerade Kanäle mit im wesentlichen gleichen kreissegmentförmigen Querschnitten unterteilen und wobei der mittlere Abstand zwischen den Enden der Rippen und der Rohrinnenwand im Bereich von 0,1 bis 3 mm liegt.

Die Erfindung betrifft außerdem ein Verfahren zur Herstellung von Cyanwasserstoff durch Umsetzung von Ammoniak und mindestens einem aliphatischen Kohlenwasserstoff mit 1 bis 4 Kohlenstoffatomen in Gegenwart eines Platin enthaltenden Katalysators bei einer Temperatur von 1000 bis 1400 °C, das dadurch gekennzeichnet ist, dass die Umsetzung in einem erfindungsgemäßen Reaktionsrohr durchgeführt wird.

Das erfindungsgemäße Reaktionsrohr umfasst ein zylindrisches Rohr aus Keramik, vorzugsweise aus einer gasdicht gesinterten Keramik und besonders bevorzugt aus gasdicht gesintertem Aluminiumoxid. Das zylindrische Rohr hat vorzugsweise einen Innendurchmesser von 10 bis 50 mm, besonders bevorzugt 15 bis 30 mm beträgt. Die Länge des zylindrischen Rohrs liegt vorzugsweise im Bereich von 1000 bis 3000 mm und besonders bevorzugt im Bereich von 1500 bis 2500 mm.

Das zylindrische Rohr ist auf der Innenseite ganz oder teilweise mit einem Platin enthaltenden Katalysator beschichtet. Vorzugsweise ist mehr als 80 % der geometrischen Oberfläche der Innenseite des zylindrischen Rohrs mit dem Platin enthaltenden Katalysator beschichtet. Als Platin enthaltende Katalysatoren können alle für das BMA-Verfahren zu Herstellung von Cyanwasserstoff bekannten Katalysatoren eingesetzt werden. Bevorzugt werden die aus WO 2004/076351 bekannten Katalysatoren mit einer verminderten Verrußungsneigung verwendet. Die Platin enthaltenden Katalysatoren können nach allen bekannten Verfahren zum Aufbringen von solchen Katalysatoren auf Trägermaterialien auf die Innenseite des zylindrischen Rohrs aufgebracht werden. Bevorzugt werden die in EP-A 0 299 175, EP-A 0 407 809 und EP-A 0 803 430 beschriebenen Verfahren zum Aufbringen des Platin enthaltenden Katalysators auf die Innenseite des zylindrischen Rohrs verwendet.

Das erfindungsgemäße Reaktionsrohr weist mindestens einen in das zylindrische Rohr eingeschobenen Einbaukörper aus Keramik mit drei oder vier von der Rohrachse zur Rohrinnenwand weisenden Rippen auf. Der Einbaukörper besteht vorzugsweise aus gesintertem Aluminiumoxid. Die Rippen des Einbaukörpers unterteilen den Rohrinnenraum in im Wesentlichen gerade Kanäle mit im Wesentlichen gleichen kreissegmentförmigen Querschnitten. Die Rippen sind dazu als im Wesentlichen geschlossene, in Längsrichtung des Rohres ausgerichtete Flächen ausgebildet. Sie können allerdings für einen Druckausgleich zwischen benachbarten Kanälen einzelne Öffnungen oder Einkerbungen an den Enden aufweisen. Die Rippen des Einbaukörpers können auf einem in der Rohrachse verlaufenden Stab oder Rohr angebracht sein. Vorzugsweise verlaufen die Rippen des Einbaukörpers aber bis zur Rohrachse und treffen in der Rohrachse aufeinander. Der mittlere Abstand zwischen den Enden der Rippen und der Rohrinnenwand liegt im Bereich von 0,1 bis 3 mm. Die Enden der Rippen sind vorzugsweise gerundet. Der mittlere Abstand bezieht sich dann auf die Stelle, an der die Rundung der Rippe der Rohrinnenwand am Nächsten kommt.

Der Einbaukörper des erfindungsgemäßen Reaktionsrohrs kann in gleicher Weise wie das zylindrische Rohr durch Extrusion oder Strangpressen einer Aluminiumoxid enthaltenden plastischen Masse und nachfolgendes Trocknen und Kalzinieren hergestellt werden.

Der Einbaukörper des erfindungsgemäßen Reaktionsrohrs hat den Vorteil, dass er sich auf Grund seiner Geometrie beim Aufheizen auf die für die Herstellung von Cyanwasserstoff nach dem BMA-Verfahren erforderliche Temperatur nicht so stark verformt, wie die aus dem Stand der Technik bekannten stabförmigen oder rohrförmigen Einbauten. Außerdem wird er auf Grund seiner Geometrie und des geringen Abstands zwischen den Enden der Rippen und der Rohrinnenwand beim Durchströmen des Reaktionsrohrs mit Gas nicht so leicht zu Schwingungen oder kreiselnden Bewegungen angeregt wie die aus dem Stand der Technik bekannten stabförmigen oder rohrförmigen Einbauten. Dadurch wird gewährleistet, dass es bei der Verwendung des Reaktionsrohrs für die Herstellung von Cyanwasserstoff nach dem BMA-Verfahren nicht zu einem Abreiben von Katalysator von der Rohrinnenwand kommt. Durch gerundete Enden der Rippen lässt sich zusätzlich ein Abreiben von Katalysator von der Rohrinnenwand vermeiden. Die Geometrie des Einbaukörpers und der geringe Abstand zwischen den Enden der Rippen und der Rohrinnenwand gewährleistet außerdem, dass die zwischen den Rippen gebildeten Kanäle während der Verwendung des Reaktionsrohrs für die Herstellung von Cyanwasserstoff den gleichen Querschnitt behalten, so dass die Strömungsverteilung auf die Kanäle gleichmäßig bleibt und thermische Spannungen auf Grund einer entlang des Rohrumfangs unsymmetrischen Temperaturverteilung vermieden werden.

In einer bevorzugten Ausführungsform berühren die Rippen die Rohrinnenwand an einzelnen Stellen. Dadurch wird auch ohne Zentrierhilfen oder Abstandhalter eine Unterteilung des Rohrinnenraums in Kanäle mit im Wesentlichen gleichen Querschnitten erreicht und der Einbaukörper lässt sich schneller und einfacher in das zylindrische Rohr einbauen als die aus dem Stand der Technik bekannten stabförmigen oder rohrförmigen Einbauten.

Die Rippen des Einbaukörpers weisen bevorzugt eine mittlere Dicke auf, die das 0,25-fache bis 2,5-fache der mittleren Wanddicke des zylindrischen Rohrs beträgt. Besonders bevorzugt beträgt die mittlere Dicke der Rippen das 0,5-fache bis 2-fache, insbesondere das 0,75-fache bis 1,5-fache der mittleren Wanddicke des zylindrischen Rohrs. Am meisten bevorzugt weisen die Rippen des Einbaukörpers die gleiche Dicke auf wie die Wand des zylindrischen Rohrs. Durch die Wahl einer Wanddicke in diesen Bereichen wird eine gute mechanische Stabilität des Einbaukörpers bei geringem Gewicht erzielt.

Der Einbaukörper ist vorzugsweise ganz oder teilweise mit einem Platin enthaltenden Katalysator beschichtet, besonders bevorzugt mit dem gleichen Katalysator wie das zylindrische Rohr. Besonders bevorzugt ist der Einbaukörper ganz mit Katalysator beschichtet. Zum Beschichten des Einbaukörpers mit dem Platin enthaltenden Katalysator können die gleichen Verfahren eingesetzt werden wie für das Beschichten des zylindrischen Rohres. Durch das Beschichten des Einbaukörpers mit einem Platin enthaltenden Katalysator lässt sich bei der Verwendung des Reaktionsrohrs für die Herstellung von Cyanwasserstoff nach dem BMA-Verfahren eine höhere Raum-Zeit-Ausbeute erreichen.

Das erfindungsgemäße Reaktionsrohr kann einen oder mehrere in das zylindrische Rohr eingeschobene Einbaukörper aufweisen. Vorzugsweise ist nur ein Einbaukörper in das zylindrische Rohr eingeschoben. Besonders bevorzugt ist ein Einbaukörper in einem mittleren Bereich des zylindrischen Rohrs angeordnet ist und weist eine Länge von 10 bis 90 %, insbesondere 40 bis 75 %, der Länge des zylindrischen Rohrs auf. Die Verwendung nur eines einzigen Einbaukörpers ermöglicht ein mechanisches Entfernen von Ruß aus dem Reaktionsrohr auch im Bereich der zwischen den Rippen des Einbaukörpers gebildeten Kanäle. Die Anordnung eines Einbaukörpers, der eine geringere Länge aufweist als das Reaktionsrohr, in einem mittleren Bereich des Reaktionsrohrs führt gegenüber einer Anordnung am Anfang oder am Ende des Reaktionsrohrs zu einer höheren Raum-Zeit-Ausbeute.

Das erfindungsgemäße Reaktionsrohr lässt sich zur Herstellung von Cyanwasserstoff verwenden, vorzugsweise Herstellung von Cyanwasserstoff nach dem BMA-Verfahren.

Bei dem erfindungsgemäßen Verfahren zur Herstellung von Cyanwasserstoff wird eine Gasmischung, die Ammoniak und mindestens einen aliphatischen Kohlenwasserstoff mit 1 bis 4 Kohlenstoffatomen enthält, durch das erfindungsgemäße Reaktionsrohr geleitet und das Reaktionsrohr durch Beheizung von außen auf einer Temperatur von 1000 °C bis 1400 °C gehalten. Vorzugsweise bestehen die Kohlenwasserstoffe zu mindestens 90 Vol.-% aus Methan. Die zur Herstellung von Cyanwasserstoff eingesetzte Gasmischung enthält vorzugsweise Ammoniak in stöchiometrischem Überschuss. Bei Verwendung von Methan als Kohlenwasserstoff wird vorzugsweise ein Molverhältnis von Ammoniak zu Methan im Bereich von 1,01 : 1 bis 1,30 : 1 verwendet. Die Strömungsgeschwindigkeit der Gasmischung durch das Reaktionsrohr wird vorzugsweise so gewählt, dass sich im gesamten Reaktionsrohr einschließlich des Bereichs, in dem Einbaukörper angeordnet sind, eine im Wesentlichen laminare Strömung ausbildet.

Mit dem erfindungsgemäßen Verfahren lässt sich eine höhere Ausbeute an Cyanwasserstoff bezüglich eingesetztem Kohlenwasserstoff und bezüglich eingesetztem Ammoniak, sowie eine höhere Raum-Zeit-Ausbeute erzielen, als bei Verwendung eines Reaktionsrohrs ohne Einbauten. Im Gegensatz zu den aus dem Stand der Technik bekannten stabförmigen oder rohrförmigen Einbauten lässt sich bei dem erfindungsgemäßen Verfahren die hohe und verbesserte Ausbeute an Cyanwasserstoff über eine längere Betriebsdauer aufrechterhalten.

Fig. 1 bis 3 zeigen Ausführungsformen des Einbaukörpers und seiner Anordnung in dem zylindrischen Rohr des erfindungsgemäßen Reaktionsrohrs.
Fig. 1 zeigt einen Einbaukörper aus Keramik mit vier Rippen in perspektivischer Ansicht.
Fig. 2 zeigt einen Querschnitt durch ein Reaktionsrohr mit einem Einbaukörper aus Keramik mit vier von der Rohrachse zur Rohrinnenwand weisenden Rippen, die an den Enden gerundet sind.
Fig. 3 zeigt einen Querschnitt durch ein Reaktionsrohr mit einem Einbaukörper aus Keramik mit drei von der Rohrachse zur Rohrinnenwand weisenden Rippen, die an den Enden gerundet sind.

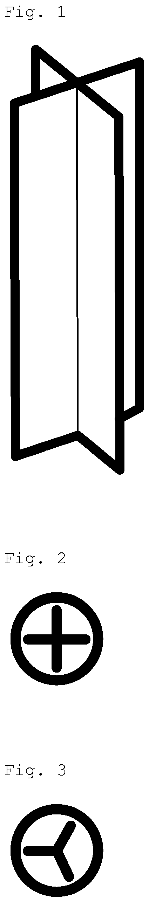

Der in Fig. 1 gezeigte Einbaukörper kann so in das zylindrische Rohr eingeschoben sein, dass der Querschnitt über die gesamte Länge des Einbaukörpers Fig. 2 entspricht, d.h. der Abstand zwischen den Enden der Rippen und der Rohrinnenwand über die gesamte Länge des Einbaukörpers gleich ist. Der Einbaukörper von Fig. 1 kann andererseits auch so in das zylindrische Rohr eingeschoben sein, dass nur in der Mitte des Einbaukörpers der Querschnitt Fig. 2 entspricht, während der Einbaukörper an den Enden mit ein oder zwei Rippen am zylindrischen Rohr anliegt, so lange dabei der mittlere Abstand zwischen den Enden der Rippen und der Rohrinnenwand im Bereich von 0,1 bis 3 mm liegt. Dies ist beispielsweise der Fall, wenn in der Mitte des Einbaukörpers der Querschnitt Fig. 2 entspricht mit einem Abstand der Rippen zur Rohrinnenwand von 1 mm, während am oberen Ende des Einbaukörpers die in Fig. 2 oben und links gezeigten Rippen die Rohrinnenwand berühren und am unteren Ende des Einbaukörpers die in Fig. 2 unten und rechts gezeigten Rippen die Rohrinnenwand berühren.

### Beispiele

### Beispiel 1 (Vergleichsbeispiel mit leerem Rohr)

Ein zylindrisches Reaktionsrohr aus gesintertem Aluminiumoxid mit 2100 mm Länge und 17 mm Innendurchmesser wurde wie in Beispiel 6 von EP 0 407 809 A beschrieben mit einem platinhaltigen Katalysator beschichtet und formiert. Anschließend wurde eine Gasmischung aus 44 mol/h Ammoniak und 40 mol/h Methan bei 1280 °C von unten durch das senkrecht stehende Reaktionsrohr geleitet. Das aus dem Reaktionsrohr austretende Gas wurde analysiert, die Ausbeute an Cyanwasserstoff betrug 79,9 % bezogen auf Ammoniak und 88,8 % bezogen auf Methan.

### Beispiel 2 (Vergleichsbeispiel mit Einbaukörper gemäß WO 2006/050781)

Beispiel 1 wurde wiederholt, wobei jedoch in dem Reaktionsrohr ein auf der Außenseite mit Katalysator beschichtetes Rohr aus gesintertem Aluminiumoxid mit 1200 mm Länge und 6 mm Außendurchmesser zentrisch angeordnet wurde und die Gasmischung durch den Ringspalt zwischen den Rohren geleitet wurde. Die Ausbeute an Cyanwasserstoff betrug 84,4 % bezogen auf Ammoniak und 93,3 % bezogen auf Methan.

### Beispiel 3

Beispiel 1 wurde wiederholt, wobei jedoch in das zylindrische Rohr ein mit Katalysator beschichteter Einbaukörper aus gesintertem Aluminiumoxid mit vier gerundeten Rippen entsprechend Fig. 1 eingeschoben wurde. Der Einbaukörper hatte eine Länge 1200 mm, eine mittlere Wandstärke der Rippen von 2,8 mm und einen mittleren Abstand zwischen den Enden der Rippen und der Rohrinnenwand von 0,5 mm. Die Ausbeute an Cyanwasserstoff betrug 88,7 % bezogen auf Ammoniak und 98,1 % bezogen auf Methan.

### Beispiel 4

Beispiel 3 wurde wiederholt, wobei jedoch ein Einbaukörper mit einer Länge von 1800 mm verwendet wurde. Die Ausbeute an Cyanwasserstoff betrug 90,8 % bezogen auf Ammoniak und 99,6 % bezogen auf Methan.

### Beispiel 5

Beispiel 3 wurde wiederholt, wobei jedoch ein Einbaukörper mit einer Länge von 600 mm verwendet wurde. Die Ausbeute an Cyanwasserstoff betrug 81,9 % bezogen auf Ammoniak und 92,6 % bezogen auf Methan.

Die Beispiele zeigen, dass mit dem erfindungsgemäßen Reaktionsrohr bei der Herstellung von Cyanwasserstoff nach dem BMA-Verfahren höhere Ausbeuten an Cyanwasserstoff bezüglich eingesetztem Kohlenwasserstoff und bezüglich eingesetztem Ammoniak sowie eine höhere Raum-Zeit-Ausbeute erzielt werden als bei Verwendung eines Reaktionsrohrs ohne Einbauten. Bei gleicher Länge des Einbaukörpers werden auch bessere Ausbeuten erzielt als bei Verwendung eines Reaktionsrohrs mit stabförmigen oder rohrförmigen Einbauten entsprechend dem Stand der Technik.

## Patentansprüche

1. Reaktionsrohr für die Herstellung von Cyanwasserstoff umfassend ein zylindrisches Rohr aus Keramik und einen auf der Rohrinnenwand aufgebrachten, Platin enthaltenden Katalysator,
**dadurch gekennzeichnet,**
**dass** es mindestens einen in das zylindrische Rohr eingeschobenen Einbaukörper aus Keramik mit drei oder vier von der Rohrachse zur Rohrinnenwand weisenden Rippen aufweist, wobei die Rippen den Rohrinnenraum in im wesentlichen gerade Kanäle mit im wesentlichen gleichen kreissegmentförmigen Querschnitten unterteilen und wobei der mittlere Abstand zwischen den Enden der Rippen und der Rohrinnenwand im Bereich von 0,1 bis 3 mm liegt.

2. Reaktionsrohr nach Anspruch 1,
**dadurch gekennzeichnet,**
**dass** das zylindrische Rohr aus dicht gesintertem Aluminiumoxid besteht.

3. Reaktionsrohr nach Anspruch 1 oder 2,
**dadurch gekennzeichnet,**
**dass** der Einbaukörper aus gesintertem Aluminiumoxid besteht.

4. Reaktionsrohr nach einem der Ansprüche 1 bis 3,
**dadurch gekennzeichnet,**
**dass** der Einbaukörper mit einem Platin enthaltenden Katalysator beschichtet ist.

5. Reaktionsrohr nach einem der Ansprüche 1 bis 4,
**dadurch gekennzeichnet,**
**dass** die Enden der Rippen gerundet sind.

6. Reaktionsrohr nach einem der Ansprüche 1 bis 5,
**dadurch gekennzeichnet,**
**dass** die Rippen eine mittlere Dicke aufweisen, die das 0,25-fache bis 2,5-fache der mittleren Wanddicke des zylindrischen Reaktionsrohrs beträgt.

7. Reaktionsrohr nach einem der Ansprüche 1 bis 6,
**dadurch gekennzeichnet,**
**dass** es genau einen in das zylindrische Rohr eingeschobenen Einbaukörper aufweist.

8. Reaktionsrohr nach Anspruch 7,
**dadurch gekennzeichnet,**
**dass** der Einbaukörper in einem mittleren Bereich des zylindrischen Rohrs angeordnet ist und eine Länge von 10 bis 90 % der Länge des zylindrischen Rohrs aufweist.

9. Verwendung eines Reaktionsrohrs nach einem der Ansprüche 1 bis 8 zur Herstellung von Cyanwasserstoff.

10. Verfahren zur Herstellung von Cyanwasserstoff durch Umsetzung von Ammoniak und mindestens einem aliphatischen Kohlenwasserstoff mit 1 bis 4 Kohlenstoffatomen in Gegenwart eines Platin enthaltenden Katalysators bei einer Temperatur von 1000 bis 1400 °C,
**dadurch gekennzeichnet,**
**dass** die Umsetzung in mindestens einem Reaktionsrohr nach einem der Ansprüche 1 bis 8 durchgeführt wird.

11. Verfahren nach Anspruch 10, **dadurch gekennzeichnet, dass** die Kohlenwasserstoffe zu mindestens 90 Vol.-% aus Methan bestehen.

## Claims

1. Reaction tube for preparing hydrogen cyanide comprising a cylindrical tube composed of ceramic and a catalyst comprising platinum applied to the inner wall of the tube,
**characterized in that**
said tube has at least one insert composed of ceramic, having three or four fins pointing from the tube axis to the inner wall of the tube, which is inserted into the cylindrical tube, wherein the fins divide the tube interior space into substantially straight channels with substantially identical circle segment cross sections and wherein the mean gap between the ends of the fins and the inner wall of the tube is in the range of 0.1 to 3 mm.

2. Reaction tube according to Claim 1,
**characterized in that**
the cylindrical tube is composed of tightly sintered aluminium oxide.

3. Reaction tube according to Claim 1 or 2,
**characterized in that**
the insert is composed of sintered aluminium oxide.

4. Reaction tube according to any one of Claims 1 to 3,
**characterized in that**
the insert is coated with a catalyst comprising platinum.

5. Reaction tube according to any one of Claims 1 to 4,
**characterized in that**
the ends of the fins are rounded.

6. Reaction tube according to any one of Claims 1 to 5,
**characterized in that**
the fins have a mean thickness which is 0.25 to 2.5 times the mean thickness of the wall of the cylindrical reaction tube.

7. Reaction tube according to any one of Claims 1 to 6,
**characterized in that**
said tube has exactly one insert inserted into the cylindrical tube.

8. Reaction tube according to Claim 7,
**characterized in that**
the insert is arranged in a central region of the cylindrical tube and has a length of 10 to 90% of the length of the cylindrical tube.

9. Use of a reaction tube according to any one of Claims 1 to 8 for preparing hydrogen cyanide.

10. Method for preparing hydrogen cyanide by reacting ammonia and at least one aliphatic hydrocarbon having 1 to 4 carbon atoms in the presence of a catalyst comprising platinum at a temperature of 1000 to 1400°C,
**characterized in that**
the reaction is carried out in at least one reaction tube according to any one of Claims 1 to 8.

11. Method according to Claim 10, **characterized in that** the hydrocarbons are composed of at least 90 vol% of methane.

## Revendications

1. Tube de réaction pour la préparation de cyanure d'hydrogène comprenant un tube cylindrique en céramique et un catalyseur contenant du platine appliqué sur la paroi interne du tube,
**caractérisé en ce qu'**il présente au moins un corps encastrable en céramique inséré dans le tube cylindrique, comportant trois ou quatre ailettes pointant de l'axe du tube à la paroi interne du tube, les ailettes divisant l'espace interne du tube en des canaux essentiellement droits avec des sections essentiellement identiques en forme d'arc de cercle et la distance moyenne entre les terminaisons des ailettes et la paroi interne du tube se situant dans la plage de 0,1 à 3 mm.

2. Tube de réaction selon la revendication 1, **caractérisé en ce que** le tube cylindrique est constitué d'oxyde d'aluminium fritté de façon dense.

3. Tube de réaction selon la revendication 1 ou 2, **caractérisé en ce que** le corps à encastrer est constitué d'oxyde d'aluminium fritté.

4. Tube de réaction selon l'une quelconque des revendications 1 à 3, **caractérisé en ce que** le corps encastrable est revêtu par un catalyseur contenant du platine.

5. Tube de réaction selon l'une quelconque des revendications 1 à 4, **caractérisé en ce que** les terminaisons des ailettes sont arrondies.

6. Tube de réaction selon l'une quelconque des revendications 1 à 5, **caractérisé en ce que** les ailettes présentent une épaisseur moyenne qui est de 0,25 fois à 2,5 fois l'épaisseur moyenne de paroi du tube de réaction cylindrique.

7. Tube de réaction selon l'une quelconque des revendications 1 à 6, **caractérisé en ce qu'**il présente exactement un corps encastrable inséré dans le tube cylindrique.

8. Tube de réaction selon la revendication 7, **caractérisé en ce que** le corps encastrable est disposé dans une zone centrale du tube cylindrique et présente une longueur de 10 à 90 % de la longueur du tube cylindrique.

9. Utilisation d'un tube de réaction selon l'une quelconque des revendications 1 à 8 pour la préparation de cyanure d'hydrogène.

10. Procédé pour la préparation de cyanure d'hydrogène par la transformation d'ammoniac et d'au moins un hydrocarbure aliphatique comportant 1 à 4 atomes de carbone en présence d'un catalyseur contenant du platine à une température de 1000 à 1400 °C, **caractérisé en ce que** la transformation est réalisée dans au moins un tube de réaction selon l'une quelconque des revendications 1 à 8.

11. Procédé selon la revendication 10, **caractérisé en ce que** les hydrocarbures sont constitués d'au moins 90 % en volume de méthane.
